# EUROPEAN PATENT SPECIFICATION

(11) **EP 3 260 637 B1**
(45) Date of publication and mention of the grant of the patent: **12.12.2018**
(21) Application number: 17175044.1
(22) Date of filing: 08.06.2017
(51) Int. Cl.: E05C 19/02, D06F 39/14

(54) **LOCKER AND HOME APPLIANCE INCLUDING THE SAME**
SCHLIESSFACH UND HAUSHALTSGERÄT DAMIT
SERRURE ET APPAREIL MÉNAGER LA COMPRENANT

(30) Priority: 20.06.2016 KR 20160076848
(43) Date of publication of application: 27.12.2017
(73) Proprietor: LG Electronics Inc., Yeongdeungpo-Gu Seoul 07336 (KR)
(72) Inventor: Cho, Kichul, 153-802 Seoul (KR)
(74) Representative: Ter Meer Steinmeister & Partner

(56) References cited:
- EP-A1- 2 087 829
- WO-A1-2012/042551
- WO-A1-2012/123980
- DE-A1- 4 343 975

## Description

### BACKGROUND OF THE INVENTION

### Field of the Invention

The present invention relates to a locker and home appliance including the same.

### Discussion of the Related Art

A home appliance consists of a cabinet forming an exterior, a storage space provided within the cabinet, an entrance provided at the cabinet so as to communicate with the storage space, and a door provided rotatably to the cabinet so as to open/close the entrance.

A general home appliance includes a locker to open/close the door. And, the locker includes a latch provided at one of the door and the cabinet and a coupling part provided at the other so as to be detachably coupled with the latch.

As a handle is provided at a front side of the door of the related art locker having the above-mentioned configuration in order to open/close the door, a user can open/close the door by holding the handle. However, if both hands are not usable, it causes a problem in opening/closing the door.

EP 2 087 829 A1 discloses a button device for blocking and releasing a door of a home appliance, comprising a housing, provided with a cover, an electrical module and a mechanical module, said electrical module providing an activation and blocking pin interacting with said mechanical module, said mechanical module providing a blocking slider interacting with said activation and blocking pin of the electrical module, a strut, which is moveable along a horizontal direction, and connected with said blocking slider, a rotating opening and blocking hook, interacting, on one side with said strut, and on the other side with prong of the door closure, a safety slide, parallel with respect to said strut, and an opening leather for manual activation of the opening.

### SUMMARY OF THE INVENTION

Accordingly, the present invention is directed to a locker and home appliance including the same that substantially obviate one or more problems due to limitations and disadvantages of the related art.

One object of the present invention is to provide a home appliance having a structure of a handle removed from a door.

Another object of the present invention is to provide a home appliance, of which door can be opened/closed by an act of pushing a front side of a door.

Another object of the present invention is to provide a home appliance, of which door can be opened by being pulled.

Another object of the present invention is to provide a home appliance, of which door can be opened by being pushed from an inside of a cabinet in a closed state of the door.

Further object of the present invention is to provide a home appliance including a safety device configured to prevent a door from being opened in the course of an operation of the home appliance.

Technical tasks obtainable from the present invention are non-limited by the above-mentioned technical tasks. And, other unmentioned technical tasks can be clearly understood from the following description by those having ordinary skill in the technical field to which the present invention pertains.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a home appliance according to one embodiment of the present invention may include a cabinet having a storage space formed inside and an entrance communicating with the storage space, a door rotatably coupled with the cabinet to open/close the entrance, a latch provided at one of the door and the cabinet, and a coupling part provided at the other one of the door and the cabinet, the coupling part including a housing including a latch insertion hole which the latch inserted therein, an engaging part including an engaging part body rotatably provided within the housing, a latch insertion portion having an end of the latch inserted therein by extending from one end of the engaging part body, and a pressurizing portion having a first pressurizing projection and a third pressurizing projection by extending the other end of the engaging part body, an engaging part torsion spring provided at the engaging part to provide an elastic force so as to enable the latch insertion portion to rotate in a direction getting close to the latch insertion hole, an operating part configured to move in a direction getting distant from the latch insertion hole by being pressurized by the first pressurizing projection and rotate in a direction perpendicular, to a direction pressurized by the third pressurizing projection, a first spring providing a restoration force to enable the operating part to be restored into a state before being pressurized by the first pressurizing projection, and a second spring providing a restoration force to enable the operating part to be restored into a state before being pressurized by the third pressurizing projection.

Preferably, the first pressurizing projection may be located closer to the operating part than the third pressurizing projection.

More preferably, the operating part may include an operating part body receiving a force from each of the first spring and the second spring and a header including a first header incline surface provided at an end of the operating part body by inclining downward from the operating part body and a second incline surface connected to an end of the first header incline surface by inclining upward from the operating part body.

If the door is closed, the first pressurizing projection may move the operating part by pressurizing the first header incline surface. If the first pressurizing projection passes an end of the header, a movement of the pressurizing projection may be restricted by the second header incline surface.

A release bar incline configured to be pressurized by the third pressurizing projection may be provided at a lateral surface of the operating part body.

Particularly, the release bar incline may be provided inclined at a prescribed angle against a direction pressurized by the third pressurizing projection and the third pressurizing projection may further include a third pressurizing surface configured to incline to correspond to the release bar incline.

More preferably, if the door is opened, the third pressurizing projection may rotate the operating part by pressurizing the release bar incline so that the header deviates from a rotation radius of the first pressurizing projection.

Preferably, a length of the third pressurizing projection may be longer than that of the first pressurizing projection.

More preferably, the header may be provided at an end of the operating part to be rotatable centering on a header shaft and an end of the header may fail to rotate over a position higher than the header shaft.

And, the home appliance may further include a release bar having the release bar incline provided thereto, the release bar provided at be moveable in a direction equal to a moving direction of the operating part if pressurized by the first pressurizing projection and a release bar guider provided at the operating part body to guide the release bar.

In this case, the release bar may be moved in order for the release bar incline to deviate from a rotation radius of the third pressurizing projection in a state that the door is open. And, the release bar may be moved in order for the release bar incline to be placed within the rotation radius of the third pressurizing projection in a state that the door is closed.

Accordingly, the present invention provides the following effects and/or features.

First of all, the present invention provides a home appliance having a structure of a handle removed from a door.

Secondly, the present invention provides a home appliance, of which door can be opened/closed by an act of pushing a front side of a door.

Thirdly, the present invention provides a home appliance, of which door can be opened by being pulled.

Fourthly, the present invention provides a home appliance, of which door can be opened by being pushed from an inside of a cabinet in a closed state of the door.

Fifthly, the present invention provides a home appliance including a safety device configured to prevent a door from being opened in the course of an operation of the home appliance.

Effects obtainable from the present invention may be non-limited by the above mentioned effect. And, other unmentioned effects can be clearly understood from the following description by those having ordinary skill in the technical field to which the present invention pertains.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a diagram showing a case that a home appliance including a locker is a washer;
FIG. 2 is a diagram showing a locker according to the present invention;
FIG. 3 is a diagram showing a latch provided at the present invention;
FIG. 4 is a diagram showing a coupling part provided at the present invention;
FIG. 5 is a diagram showing an engaging part provided at the present invention;
FIG. 6 is a diagram showing an operating part provided at the present invention;
FIG. 7 is a diagram showing a slider provided at the present invention;
FIG. 8 is a diagram showing a door open/close sensing part provided at the present invention;
FIG. 9 is a diagram showing a state that a door is open in the present invention;
FIG. 10 is a diagram showing a state that a door is closed in the present invention;
FIG. 11 is a diagram showing the operational relation among a trigger, a rotation stopper and a release bar;
FIG. 12 is a diagram showing that a door is normally opened in the present invention;
FIG. 13 is a diagram showing that a door is forced to be opened in the present invention; and
FIG. 14 is a diagram showing a state that a closed door is locked in present invention.

### DETAILED DESCRIPTION OF THE INVENTION

Reference will now be made in detail to the preferred embodiments of the present invention, examples of which are illustrated in the accompanying drawings. And, the present invention may be non-limited by the preferred embodiments of the present invention. Wherever possible, the same reference numbers will be used throughout the drawings to refer to the same or similar parts.

Terminologies used in the present specification need to be construed based on the substantial meanings of the corresponding terminologies and the overall matters disclosed in the present specification rather than construed as simple names of the terminologies. If a term used in the present specification semantically conflicts with a general meaning of the corresponding term, it may follow the definition used in the present specification.

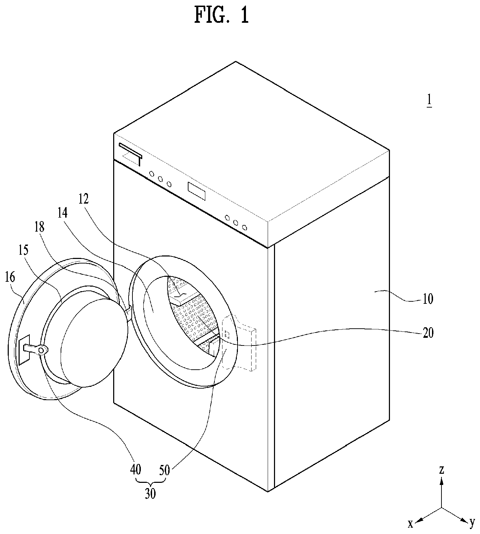

The present invention relates to a locker 30, which is configured to detachably fix a door 15 to a cabinet 10 having an entrance 14, and a home appliance. And, FIG. 1 is a diagram showing a case that a home appliance including a locker is a washer.

Although a locker of the present invention may be provided at various home appliances as well as to a washer, for clarity, the present invention shall be described with reference to a case that a home alliance including a locker is a washer.

Referring to FIG. 1, a washer corresponding to a home appliance includes a cabinet 10 forming an exterior, a storage space 12 provided within the cabinet 10, an entrance 14 provided at the cabinet 10 so as to communicate with the storage space 12, and a door 16 rotatably provided at the cabinet 10 so as to open/close the entrance 14.

And, a laundry holding part 20 capable of holding laundry and the like may be provided within the storage space 12. The laundry holding part 20 may include a tub configured to store wash water and a drum rotatably provided within the tub so as to store laundry.

And, a hinge 18 for connecting the door 16 and the cabinet may be provided. The hinge 18 may be connected to one side of the door 16 and a front side of the cabinet 10 configuring a circumference of the entrance 14.

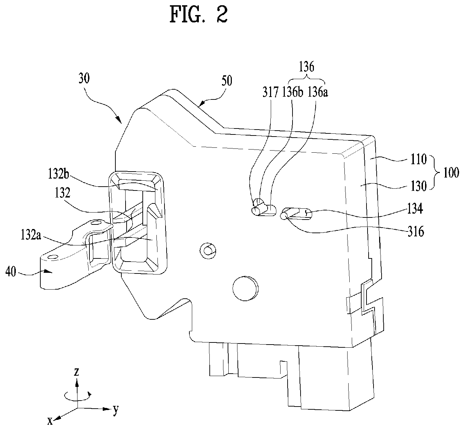

FIG. 2 is a diagram showing a locker according to the present invention. Referring to the orthogonal coordinates system shown in FIG. 2, a positive direction of an x-axis, a negative direction of the x-axis, a positive direction of a z-axis, a negative direction of the z-axis, a positive direction of a y-axis and a negative direction of the y-axis may be defined as a front direction, a rear direction, a top direction, a bottom direction, a right direction and a left direction, respectively. Yet, the x-, y- and z-axis orthogonal coordinates system rotates together according to an installed direction of the locker. In this case, definitions for a front/rear direction, a top/bottom direction, and a right/left direction may be changeable.

Meanwhile, regarding a direction of rotation, with reference to a direction of a thumb of a right hand, a direction indicated by the rest of fingers is defined as a counterclockwise direction. For instance, a counterclockwise direction may be defined by the right handed screw rule with reference to a positive direction of the z-axis.

In order to fix the door 16, which is turned centering on the hinge 18, to the cabinet 10, a locker 30 may be provided.

Referring to FIG. 2, the locker 30 may include a latch 40 provided at one of the door 16 and the cabinet 10 and a coupling part 50 provided at the other. The latch 40 is provided at the door 16 in general, and the coupling part 50 is preferably provided at the cabinet 10.

The coupling part 50 may include a latch insertion hole 132. The latch insertion hole 132 is provided at a front side of the cabinet 10. And, the latch 40 can enter or exit the latch insertion hole 132. By selectively fixing the latch 40, the door 16 can be fixed.

Before describing the latch 40 and the coupling part 50 in further detail, an operation of the locker of the present invention is schematically described as follows.

First of all, in case of intending to close the open door, if a force is applied to the door in a cabinet direction, the latch is fixed in a manner of being inserted in the latch insertion hole.

Secondly, in case of intending to open the closed door, if a force is applied to the door in the cabinet direction, the fixed latch is unfastened from the inside of the latch insertion hole so as to be pulled out of the latch insertion hole.

Thirdly, in case of intending to force the closed door to be opened (e.g., if the door is pushed in a direction opposite to the cabinet direction or an inner side of the door is pushed from the inside of the cabinet), if the door is pulled with a predetermined force, the fixed latch is unfastened from the inside of the latch insertion hole so as to be pulled out of the latch insertion hole.

Fourthly, if it is necessary to restrict the closed door from being opened, the latch can be set not to be unfastened from the inside of the latch insertion hole, which is called the locking of the door.

In the following description, configurations of the latch 40 and the coupling part 50 and the operational relation between the latch and the coupling part according to the operation of the locker shall be described in order.

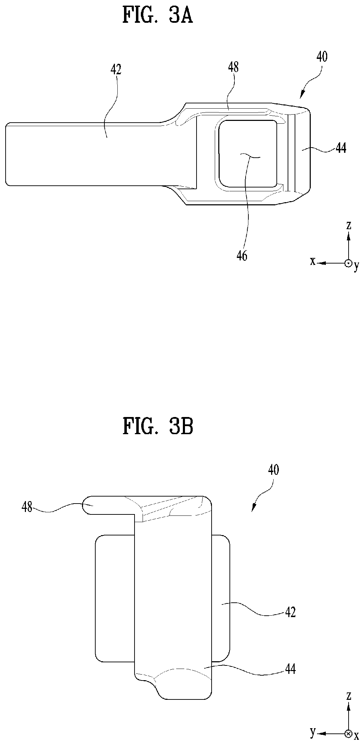

FIG. 3 is a diagram showing a latch provided at the present invention.

Referring to FIG. 3, the latch 40 may include a latch bar 42 projected from the door 16, a latch head 44 provided at an end of the latch bar 42, a latch hole 46 provided at perforate the latch head 44, and a latch protrusion 48 protruding from the latch hole 46.

The latch bar 42 may be provided in a manner that a top-bottom length is greater than a right-left width. The latch head 44 is provided with a top-bottom length greater than the latch bar 42 and a right-left width smaller than the latch bar 42. Herein, the right-left width means a length in y-axis direction and the top-bottom length means a length in z-axis direction. If the latch 40 is inserted in the latch insertion hole 132, the latch head 44 rotates the engaging part 200 by pressurizing a first insertion projection 232 that will be described later.

The latch hole 46 may be provided in the right-left width direction (e.g., y-axis direction) of the latch head 44, and a second insertion projection 234 (described later) is inserted in the latch hole 46. Details shall be described later.

The latch protrusion 48 may be provided in a manner of extending from the latch head 44 of the top or bottom side of the latch hole 46 in a right direction (e.g., a positive direction of y-axis), and is preferably provided at the top side in the present invention. Herein, the top side means the positive direction of the z-axis and the bottom side means the negative direction of the z-axis.

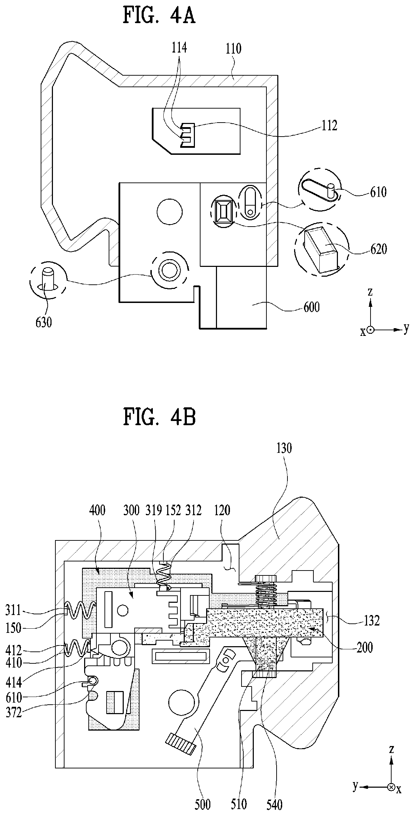

FIG. 4 is a diagram showing a coupling part 50 provided at the present invention. The coupling part 50 may include a rear housing 110 shown in FIG. 4A and a front housing shown in FIG. 4B.

The front and rear housings 130 and 110 are coupled together so as to form a housing 100. And, a prescribed space may be provided as an inner space 120 within the housing 100.

Preferably, according to the present invention, the inner space 120 is formed in the front housing 130 and an open side of the rear is covered with the rear housing 110. Namely, the rear housing 110 may play a role as a cover configured to cover the open side of the front housing.

The rear housing 110 may include a housing stopper 112 capable of restricting the movement of an operating part body 310 that will be described later. The housing stopper 112 may be provided in a manner of being projected from an inner surface of the rear housing 110. The housing stopper 112 may include at least one housing stopper recess 114 formed in a direction of the latch insertion hole 132 (i.e., a negative direction of y-axis).

The front housing 130 may include the latch insertion hole 132 formed at the end of the front side. Herein, the coupling part 50 may be installed at the cabinet 10 so that the latch insertion hole 132 can be adjacent to the entrance 14. Namely, a gap between the entrance 14 and the latch insertion hole 132 is formed to be substantially equal to the thickness of a gasket 15 provided at the door 16, whereby a coupling force of the door by the locker 30 can be raised.

The latch insertion hole 132 may include an insertion hole incline 132a formed by inclining in an insertion direction of the latch 40. If the latch 40 is inserted in a manner of being spaced apart in a prescribed distance from the latch insertion hole 132, the insertion hole incline 132a may guide the latch head 44 to the latch insertion hole 132 by coming in contact with the latch head 44.

The latch insertion hole 132 may further include an insertion hole sill 132b formed in a manner of further inclining than the insertion hole incline 132a in the insertion direction of the latch 40. The insertion hole sill 132b may guide the latch protrusion 48 by coming in contact with the latch protrusion 48. Hence, when the latch 40 is inserted in the latch insertion hole 132, an insertion height of the latch 40 can be set uniform.

Since the latch protrusion 48 is provided above the latch head 44, the insertion hole sill 132b is preferably provided above the insertion hole incline 132a.

Meanwhile, the front housing 130 may include a first shaft guider hole 134 and a second shaft guider hole 136 configured to guide movements of a first shaft 316 and a second shaft 317 of the operating part 300 (described later) in a manner of having the shafts 316 and 317 inserted therein, respectively [cf. FIG. 2].

The first shaft guider hole 134 and the second shaft guider hole 136 may be provided at the front side of the front housing 130 having the latch insertion hole 132 formed therein.

The first shaft guider hole 134 may extend in a first length in a right-left direction. And, the first shaft 316 is guided in the right-left direction by the first shaft guider hole 134.

Meanwhile, the second shaft guider hole 136 may include a second shaft guider hole-1 136a extending in a first prescribed length in a right-left direction by being spaced apart from the first shat guider hole 134 and a second shaft guider hole-2 136b extending in a second prescribed length in a top-bottom direction (preferably upward) from an end of the second shaft guider hole-1 136a.

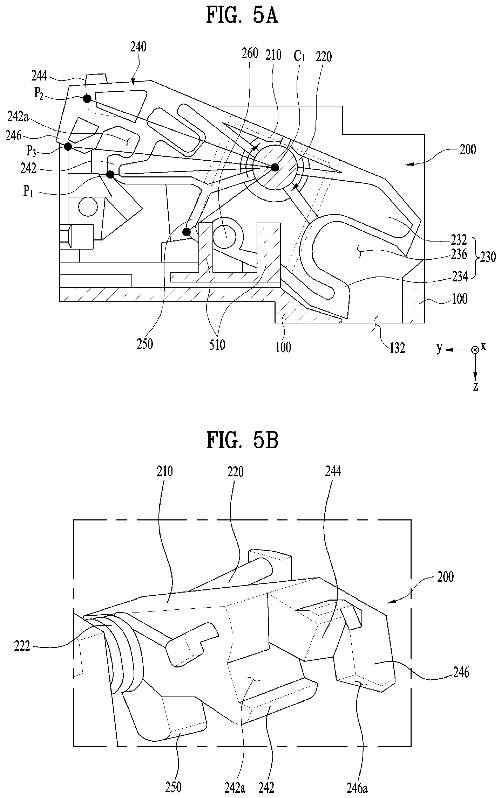

Meanwhile, in the inner space 120 formed within the housing 100, an engaging part 200, an operating part 300, a slider 400, a door open/close sensing part 500 and an electric device 600 may be accommodated. An engaging part, an operating part, a slider and an error detecting part are described in order with reference to FIGs. 5 to 8 as follows.

FIG. 5 is a diagram showing an engaging part provided at the present invention.

Referring to FIG. 4B and FIG. 5A, the engaging part 200 is rotatably provided within the housing 100.

The engaging part 200 may include an engaging part body 210, an engaging part rotation shaft 220 provided at the engaging part body 210, a latch insertion portion 230 extending from one end of the engaging part body 210 so as to receive a force by coming in contact with the latch 40, and a pressurizing portion 240 extending from the other end of the engaging part body 210.

The engaging part rotation shaft 220 may extend in a top-bottom direction (i.e., z-axis direction) from a lateral side of the engaging part body 210, and both ends of the engaging part rotation shaft 220 may be rotatably coupled with the housing 100.

In order to rotate the engaging part 200 counterclockwise with reference to the top direction (i.e., positive direction of z-axis), an engaging part torsion spring 222 may be provided at the engaging part rotation shaft 220. Namely, the engaging part torsion spring 222 rotates the engaging part 200 in a direction for the latch insertion portion 230 to get closer to the latch insertion hole 132.

The engaging part torsion spring 222 perforates the engaging part rotation shaft 220. One end of the engaging part torsion spring 222 is fixed to the engaging part body 210 and the other end is fixed to the housing 100. With reference to the positive direction of z-axis, the engaging part torsion spring 222 provides an elastic force to the engaging part 200 in a counterclockwise direction. Such a direction is called a restoration rotation direction of the engaging part 200.

Meanwhile, the latch insertion portion 230 may extend to one end of the engaging part body 210 toward a side provided with the latch insertion hole 132. The latch insertion portion 230 may include a first insertion projection 232 extending from the engaging part body 210, a second insertion projection 234 extending from the engaging part body 210 so as to be spaced apart from the first insertion projection 232, and an insertion recess 236 provided between the first insertion projection 232 and the second insertion projection 234.

Herein, the first insertion projection 232 may be provided at a place more distant from the latch insertion hole 132 than the second insertion projection 234. The first insertion projection 232 extends from one side of the engaging part body 210, and the second insertion projection 234 may extend from one side of the engaging part body 210 so as to be spaced apart from the first insertion projection 232. Moreover, an extension length of the second insertion projection 234 may be smaller than that of the first insertion projection 232.

The engaging part rotation shaft 220 may be provided in a manner of deviating from a center of the engaging part body 210. In this case, the first insertion projection 232 may extend from an end of the engaging part body 210 relatively close to the engaging part rotation shaft 220, and the second insertion projection 234 may extend from an end of the engaging part body 210 relatively distant from the engaging part rotation shaft 220. Namely, centering on the engaging part rotation shaft 220, a portion of the engaging part body 210 from which the second insertion projection 234 extends may be located farther than a portion of the engaging part body 210 from which the first insertion projection 232 extends.

The engaging part rotation shaft 220 may be placed on an extension line of the first insertion projection 232. And, the engaging part rotation shaft 220 may be provided not to be placed on an extension line of the second insertion projection 234.

Meanwhile, the pressurizing portion 240 may be formed in a manner of extending from the other end of the engaging part body 210, i.e., the engaging part body 210 located in a direction opposite to the latch insertion portion 230 centering on the engaging part rotation shaft 220.

The pressurizing portion 240 can move the operating part 300 by pressurizing the operating part 300 in case that the engaging part 200 is rotated by the latch 40 in a direction opposite to the restoration rotation direction. Hereinafter, in the present specification, a direction in which the pressurizing portion 240 pressurizes the operating part 300 shall be named a pressurizing direction.

The pressurizing portion 240 may include a first pressurizing projection 242, a second pressurizing projection 244 and a third pressurizing projection 246.

The first pressurizing projection 242, the second pressurizing projection 244 and the third pressurizing projection 246 may differ from each other in length. For instance, the first pressurizing projection 242 may be formed shorter than the second pressurizing projection 244, the second pressurizing projection 244 may be formed shorter than the third pressurizing projection 246, and the first pressurizing projection 242 may be formed shorter than the third pressurizing projection 246.

The first pressurizing projection 242, the second pressurizing projection 244 and the third pressurizing projection 246 include a first pressurizing point P1, a second pressurizing point P2 and a third pressurizing point P3, which pressurize the operating part 300, respectively. And, the first to third pressurizing points P1 to P3 may differ from each other in height. For instance, a height of the first pressurizing point P1 is smaller than that of the second or third pressurizing point P2 or P3, and a height of the third pressurizing point P3 may be smaller than that of the second pressurizing point P2. This is shown in FIG. 5A.

The first to third pressurizing points P1 to P3 may be provided in a manner of differing from each other in the rotated angle with reference to the engaging part rotation shaft 220. For instance, with reference to the negative direction of z-axis on the engaging part rotation shaft 220, the first pressurizing point P1 is provided at a location rotated counterclockwise further than the third or second pressurizing point P3 or P2 and the third pressurizing point P3 may be provided at a location rotated counterclockwise further than the second pressurizing point P2. This is shown in FIG. 5A as well.

Meanwhile, the first to third pressurizing points P1 to P3 may be provided in a manner of differing from each other in a straight distance from a center C1 of the engaging part rotation shaft 220. For instance, the lengths may gradually decrease in order of a radius of the third pressurizing point P3, a radius of the second pressurizing point P2 and a radius of the first pressurizing point P1. This is shown in FIG. 5A.

Meanwhile, the rotation radiuses of the first to third pressurizing points P1 to P3 may be provided so as not to overlap with each other.

Referring to FIG. 5B, the first pressurizing projection 242 extends from the engaging part body 210 and may have the same width of the engaging part body 210. Herein, the width of the first pressurizing projection 242 means a length extending in the z-axis direction. An end of the first pressurizing projection 242 is rounded so as to move smoothly by coming in contact with a first incline surface 322 of a header (described later).

The second pressurizing projection 244 may be provided at a location further spaced than the first pressurizing projection 242 in a restoration rotation direction. In this case, when the right handed screw rule is used with reference to the positive direction of z-axis, as mentioned in the foregoing description, the restoration rotation direction is the direction indicated by the rest of four fingers. A width of the second pressurizing projection 244 may be set smaller than that of the first pressurizing projection 242.

A first pressurizing recess 242a is provided between the first and second pressurizing projections 242 and 244. The first pressurizing recess 242a fixes the engaging part 200 as a header 320, which will be described later, is inserted in the recess 242a and restricts the engaging part 200 from rotating in the restoration rotation direction.

The third pressurizing projection 246 may extend from the second pressurizing projection 244 in a direction opposite to the restoration rotation direction of the engaging part 200. A width of the third pressurizing projection 246 may be set smaller than that of the first pressurizing projection 242. And, the third pressurizing projection 246 may be provided on the axis of the engaging part rotation shaft 220 different from the first pressurizing projection 242.

A third pressurizing surface 246a may be provided at an end of the third pressurizing projection 246. A normal line of the third pressurizing surface 246a is formed to incline toward the operating part 300. Namely, if the third pressurizing surface 246a pressurizes the operating part 300, a force is applied to the operating part 300 in a direction vertical to a pressurizing direction. The operating part 300 makes a rotational motion centering on a first shaft 316, which will be described in detail later.

Meanwhile, the engaging part 200 may further include a fourth pressurizing projection 250 extending from the engaging part body 210.

The fourth pressurizing projection 250 extends from the engaging part body 210 and may be provided spaced apart from the first pressurizing projection 242 in a direction opposite to the restoration rotation direction. And, the fourth pressurizing projection 250 may be provided in a manner that a straight distance from a center C1 of the engaging part rotation shaft 220 is smaller than that of the first pressurizing projection 242.

The fourth pressurizing projection 250 plays a role as a stopper of the slider 400 attempting to move in a direction of the latch insertion hole 132 by receiving an elastic force, which will be described in detail with the slider 400.

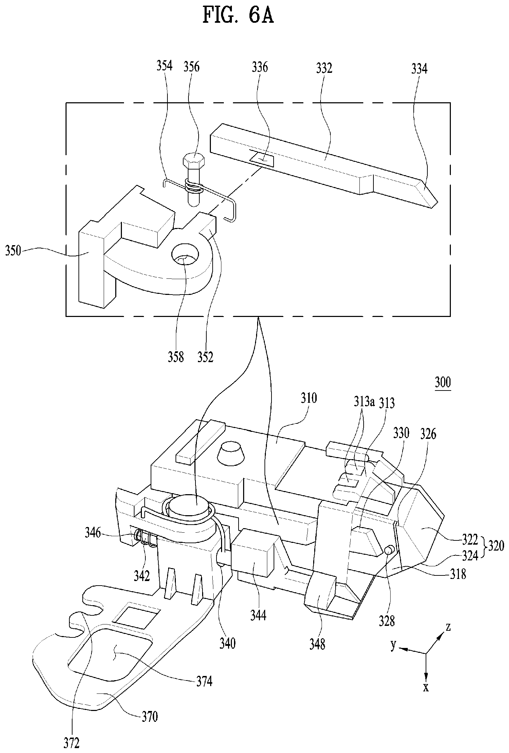

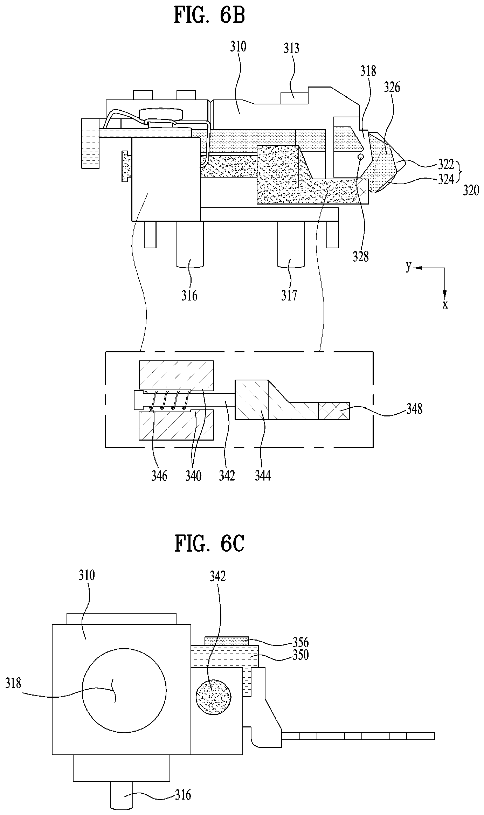

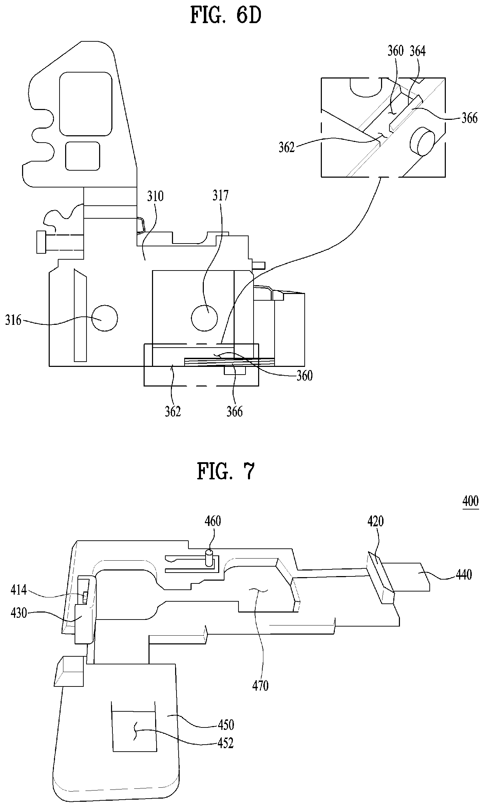

FIG. 6 is a diagram showing an operating part provided at the present invention. The operating part 300 operates by receiving a force from the pressuring portion 240 of the engaging part 200. In this case, the operating part 300 is capable of a straight motion of getting more distant from or closer to the latch insertion hole 132 (e.g., a case of closing a door, a case of forcing a door to be opened) and a rotational motion centering on the first shaft 316 (e.g., a general case of opening a door). A structure for implementing an operation of the operating part 300 is described as follows.

Referring to FIG. 6A and FIG. 6B, the operating part 300 may include an operating part body 310, a header 320 provided at one end of the operating part body 310, a trigger 332, and a release bar 342.

The first and second shafts 316 and 317 extending from the operating part body 310 may be provided at one surface of the operating part body 310. The first and second shafts 316 and 317 may be provided in a manner of by being projected from a bottom surface (with reference to the drawing of FIG. 6A) of the operating part body 310 in the positive direction of z-axis and may be spaced apart from each other. The first and second shafts 316 and 317 are guided by being inserted in the aforementioned first and second shaft guider holes 134 and 136, respectively. And, they become the elements of restricting the movement of the operating part 300.

Meanwhile, an operating part body stopper 313 may be provided at one surface of the operating part body 310. The operating part body stopper 313 may be formed by being projected from a top surface (with reference to the drawing of FIG. 6A) of the operating part body 310 in the negative direction of x-axis.

The operating part body stopper 313 may include at least one operating part stopper recess 313a extending in a direction (y-axis direction) of getting distant from the latch insertion hole 132. The operating part stopper recess 313a and the housing stopper recess 114 are spaced apart from each other in a moving direction of the operating part 300.

In general cases, the operating part stopper recess 313a and the housing stopper recess 114 are inserted by crossing with each other. Hence, the housing stopper 112 and the operating part body stopper 313 do not restrict mutual motions.

The header 320 may include a first header incline surface 322 and a second header incline surface 324. If the engaging part 200 rotates in a pressurizing direction, the first header incline surface 322 means a surface pressurized by the first pressurizing projection 242. If the engaging part 200 rotates in a restoration rotation direction, the second header incline surface 324 means a surface pressurized by the first pressurizing projection 242. With reference to the drawing of FIG. 6A, the first header incline surface 322 and the second header incline surface 324 meet the end of the header 320 and the first header incline surface 322 may be provided over the second header incline surface 324.

The header 320 is rotatably connected to the operating part body 310 by the header shaft 328, and may be provided at the end of the operating part body 310 close to the latch insertion hole 132.

The end of the header 320 may be provided in a manner of failing to further move above the header shaft 328 and rotating at a prescribed angle equal to or smaller than the header shaft 328. So to speak, the end of the header 320 is able to rotate up to the same height of the header shaft 328 only.

To this end, a header sill 326 protruding from a surface vertical to the header shaft 328. The header sill 326 restricts rotation of the header 320, thereby preventing the end of the header 320 from moving to a location higher than the header shaft 328.

Meanwhile, referring to FIG. 6A, the trigger 332 may be provided at be movable to the operating part body 310 in a direction getting more distant from or closer to the latch insertion hole 132 (i.e., y-axis direction). Namely, the trigger 332 may move in a straight movement direction of the operating part 300. And, the trigger 332 is preferably provided in form of a bar.

The operating part body 310 may further include a trigger guider 330 configured to guide the trigger 332. The trigger guider 330 is provided at one surface of the operating part body 310, and the trigger 332 moves by perforating the trigger guider 330.

The trigger 332 may include a trigger incline 334 provided at one end close to the latch insertion hole 132 by inclining downward with reference to a moving direction of the trigger 332. The trigger incline 334 may be provided in the same inclining direction of the first header incline surface 322. The trigger incline 334 may be pressurized by the second pressurizing projection 244. In this case, the trigger 332 may move in a direction getting distant from the latch insertion hole 132 (e.g., positive direction of y-axis) by being guided by the trigger guider 330.

Meanwhile, the operating part 300 may further include a rotation stopper 350 configured to rotate by communicating with the trigger 332. The rotation stopper 350 is rotatably connected to the operating part body 310. Since a rotation stopper fixing portion 356 is fixed to the operating part 310 through a rotation stopper perforated hole 358 provided at the rotation stopper 350, the rotation stopper 350 can rotate centering on the rotation stopper fixing portion 356.

A rotation stopper interlocking projection 352 projected from the rotation stopper 350 may be inserted in a trigger communicating hole 336 provided at the trigger 332. Hence, if the trigger 332 moves in a y-axis direction, the rotation stopper 350 can rotate. For instance, as shown in FIG. 6A, if the trigger 332 moves in a direction getting distant from the latch insertion hole 132 (i.e., positive direction of y-axis), a torque is generated from the rotation stopper 350 so as to rotate clockwise.

The rotation stopper before rotation by the trigger 332 restricts the movement of the slider 400 that will be described later. If the rotation stopper 350 rotates by the trigger 332, it fails to restrict the movement of the slider 400 but the slider 400 may move in the direction of the latch insertion hole 132. Details shall be described later.

Meanwhile, the operating part 300 may further include a rotation stopper torsion spring 354 configured to provide an elastic force for restoring the rotation stopper 350 into an original state. Herein, the original state means a state before the rotation stopper 350 rotates in response to a movement of the trigger 332. Namely, if the trigger 332 rotates the rotation stopper 350 by moving in a direction getting distant from the latch insertion hole 132, it means that the rotation stopper 350 is rotated to enable the trigger 332 to move in the direction of the latch insertion hole 132.

The rotation stopper torsion spring 354 is perforated by the fixing portion 356 of the rotation stopper, one end is fixed to the rotation stopper 350, and the other end may be fixed to the operating part body 310.

Meanwhile, referring to FIG. 6B, the release bar 342 may be provided at the operating part body 310 to be movable in a direction getting distant from or close to the latch insertion hole 132 (i.e., y-axis direction). Namely, the release bar 342 may move in a straight movement direction of the operating part 300. Moreover, the release bar 342 is preferably provided as a bar type.

The release bar 342 may be provided under the trigger 332 with reference to FIG. 6B. So to speak, the release bar 342 is preferably provided closer to a bottom side of the operating part body 310.

The operating part body 310 may further include a release bar guider 340 configured to guide the movement of the release bar 342. The release bar guider 340 is provided at one surface of the operating part body 310 provided with the trigger guider 330. And, the release bar 342 may move by perforating the release bar guider 340.

The release bar 342 may be configured so as to be provided an elastic restoration force in a direction getting distant from the latch insertion hole 132 (i.e., positive direction of y-axis). To this end, as shown in FIG. 6B, a release bar spring 346 may be provided between an end of the release bar 342 and the release bar guider 340.

The release bar spring 346 is released by the release bar 342, one end of the release bar spring 346 is fixed to an end of the release bar 342 (e.g., an end portion of the release bar located at a side distant from the latch insertion hole 1321), the other end of the release bar spring 346 is fixed to the release bar guider 340. Hence, if the release bar 342 moves in a direction of the latch insertion hole 132 (i.e., negative direction of y-axis), the release bar spring 346 is compressed to generate an elastic force. The elastic force may work as a restoring force for moving the release bar 342 in a positive direction of y-axis.

The release bar 342 is moved by the release bar spring 346 in a direction getting distant from the latch insertion hole 132 (i.e., positive direction of y-axis). In doing so, the release bar stopper 344 may restrict the movement of the release bar 342. The release bar stopper 344 may be provided at an outer circumference of the release bar 342 so as to have a cross-sectional area wider than that of the release bar 342 perforating the release bar guider 340. The release bar stopper 344 may be fixed to the other end of the release bar 342 (e.g., an end portion of the release bar located closer to the latch insertion hole 132).

Hence, if the release bar 342 is moved by the release bar spring 346 in a direction of getting distant from the latch insertion hole 132, the release bar stopper 344 is caught on the release bar guider 340 so as to restrict the movement of the release bar 342.

Meanwhile, the operating part 300 may further include a release portion incline 348 pressurized by the third pressurizing projection 246. The release portion incline 348 may be provided at the release bar 342, and more particularly, to the other end of the release bar 342 (i.e., an end portion of the release bar located closer to the latch insertion hole 132) or the release bar stopper 344.

The release portion incline 348 is formed to incline on a lateral surface of the operating part 300, and the third pressurizing projection 246 may be provided in a normal direction of the release portion incline 348.

When the third pressurizing projection 246 pressurizes the release portion incline 348 (positive direction of x-axis), a pressurized force may be divided into a vertical drag of pressurizing the release portion incline 348 vertically and a frictional force between the release portion incline and the third pressurizing projection 246. And, the vertical drag can be further divided into a vertical component (x-axis direction) force and a horizontal component (y-z plane) force.

Since the operating part body 310 is provided within the housing 100 so as not to be moveable in an x-axis direction, the force of the vertical component fails to contribute to the movement of the operating part body 310. On the contrary, the force of the horizontal component works on a lateral surface of the operating part body 310 so as to work as a turning force by which the operating part body 310 can be rotated centering on the first shaft 316. In this case, a rotation radius of the operating part body 310 is restricted by the second shaft 317 guided within the second shaft guider hole 136.

In the present invention, if the release portion incline 348 is pressurized by the third pressurizing projection 246, the operating part body 310 receives a force in the z-axis direction and rotates counterclockwise with reference to the negative direction of the x-axis (i.e., direction in parallel with the first shaft).

Meanwhile, the operating part body 310 may be provided with an elastic force by the second spring 312 in a direction opposite to the rotation direction of the operating part body 310 rotated by the third pressurizing projection 246. As shown in FIG. 4B, the second spring 312 may be provided at an opposite of the operating part body 310 provided with the release portion incline 348. One end of the second spring 312 may be fixed to the second fixing projection 152 provided at the housing 100 and the other end of the second spring 312 may be fixed to the second spring operating part fixing projection 319. Hence, if the operating part body 310 is rotated by the pressing force of the third pressurizing projection 246, the second spring 312 is compressed. If the pressing force of the third pressurizing projection 246 disappears, the compressed second spring 312 provides a restoration force for rotationally moving the operating part body 310 into an original sate.

Referring to FIG. 4B and FIG. 6A, the operating part body 310 can be provided with an elastic force by the first spring 311 in the direction of the latch insertion hole 132 (or, negative direction of y-axis). The first spring 311 may be provided at the other end of the operating part body 310, i.e., an opposite side of a portion of the operating part body 310 provided with the header 320. The first spring is a compressed coil spring and can provide a force of pushing the operating part body 310 in the direction of the latch insertion hole 132.

Referring to FIG. 6C and FIG. 4B, a first spring insertion hole 318 may be provide to the operating part body 310 so that one end of the first spring 311 can be inserted therein. And, the operating part body 310 may include a first fixing projection 150 projected from the housing 100 so as to fix the other end of the first spring 311 thereto.

Referring to FIG. 6D, in order to prevent the operating part body 310 from being immediately restored by the second spring 312 after the operating part body 310 has been rotated by the third pressurizing projection 246, the operating part body 310 may further include a rotation delay guider recess configured to delay the restoration rotation of the operating part body 310.

The rotation delay guider recess 360 is provided at a bottom side of the operating part body 310, and may be formed concave so as to have a prescribed length in a direction getting distant or close to the latch insertion hole 132.

The rotation delay guider recess 360 may include a rotation delay rib 364 extending from a lateral surface of the operating part body 310 and a rotation delay doorway 362 communicating with the operating part body 310 by perforating the rotation delay rib 364 on a side distant from the latch insertion hole 132. And, the rotation delay rib 364 may be provided with a rotation delay incline 366 configured to incline downward toward an inside of the rotation delay guider recess 360 from an outside.

If the operating part body 310 is rotated by the pressurization of the third pressurizing projection 246, as a slider delay projection 460 (described later) is provided in a rotation radius of the rotation delay incline 366, the rotation delay incline 366 overstrides a top of the slider delay projection 460 and the slider delay projection 460 is inserted into the rotation delay guider recess 360. Hence, although the operating part body 310 attempts to rotate in an opposite direction, a movement of the rotation delay rib 364 is restricted by the slider delay projection 460.

In order for the slider delay projection 460 to be withdrawn from the rotation delay guider recess 360, one of the slider 400 and the operating part body 310 makes a relative motion so that the slider delay projection 460 can be withdrawn externally through the rotation delay doorway 362.

In the present invention, as the slider delay projection 460 moves toward the rotation delay doorway 362 by moving into the rotation delay guider recess 360, the slider delay projection 460 is withdrawn externally through the rotation delay doorway 362. Thereafter, the operating part body 310 is rotated by the second spring 312 in an opposite direction (e.g., direction of returning to a state before rotating by being pressurized by the third pressurizing projection 246).

Referring now to FIG. 6A, the operating part 300 may include an operating part wing 370 extending from the operating part body 310. The operating part wing 370 is a plate member extending from a lateral surface of the operating part body 310 and may be perforated to form an operating part wing hole 374 therein. And, an operating part locking portion 372 may be further provided at one side of the operating part wing 370.

The operating part wing hole 374 selectively communicates with a slider wing hole 452 (described later), thereby locking the closed door 16 not to be opened by a force of pushing or pulling the door. And, the operating part locking portion 372 means a portion on which a force of rotating the operating part body 310 works so that the operating part wing hole 374 and the slider wing hole 452 can communicate with each other.

The operating part locking portion 372 may be provided with a concave recess or a convex projection.

In the present invention, the operating part wing 370 extends from the operating part body 310 in a bottom direction (cf. FIG. 4B) or a negative direction of z-axis, the operating part wing hole 374 is formed in a front-rear direction of an x-axis direction, the operating part locking portion 372 is provided at one side of the operating part wing 370, and the operating part body 310 may be provided at be rotated in the same direction of rotating the operating part body 310 by the third pressurizing projection 246. Namely, the operating part body 310 may be rotated in a counterclockwise direction with reference to the negative direction of x-axis.

FIG. 7 is a diagram showing a slider provided at the present invention. Referring to FIG. 4B and FIG. 7, the slider 400 may include a plate type member provided between the operating part 300 and the front housing 100.

The slider 400 may include a slider perforated hole 470 perforated by the first and second shafts 316 and 317 extending from the operating part body 310. Hence, the movement of the operating part body 310 and the movement of the slider 400 may not interfere with each other.

As shown in FIG. 4B, the slider 400 may be provided at receive an elastic force from the slider spring 410 in a direction of the latch insertion hole 132 within the housing 100.

One end of the slider spring 410 may be fitted into a slider spring fixing projection 414 provided at an end of the slider 400 distant from the latch insertion hole 132, and the other end of the slider spring 410 may be fitted into a third fixing projection 412 projected from an inner circumference of the housing 100 opposing the end of the slider 400.

Hence, if the slider 400 moves in a direction getting distant from the latch insertion hole 132, the slider spring 410 is compresses. And, an elastic force of the slider spring 410 works as a restoration force of moving the slider 400 in the direction of the latch insertion hole.

Referring to FIG. 7, the slider 400 may include a first slider stopper 420 projected from an end of the slider 400 adjacent to the latch insertion hole 132 in a direction vertical to a plate type of the slider 400 and a slider extension portion 440 projected in a horizontal direction.

The first slider stopper 420 can move the slider 400 in the direction getting distant from the latch insertion hole 132 by being pressurized in a manner of coming in contact with the aforementioned fourth pressurizing projection 250.

So to speak, if the latch insertion portion 230 is rotated in the direction of the latch insertion hole 132 by an elastic force of the engaging part torsion spring 222, the fourth pressurizing projection 250 pressurizes one surface of the first slider stopper 420 (e.g., face close to the latch insertion hole 132) and the slider 400 moves in a direction getting distant from the latch insertion hole 132.

In this case, the slider spring 410 provides an elastic force of moving the slider 400 in the direction of the latch insertion hole 132. Yet, since the elastic restoration force of the engaging part torsion spring 222 is stronger than that of the slider spring 410, the slider 400 moves in the direction getting distant from the latch insertion hole 132 (or, positive direction of y-axis).

Yet, if the engaging part 200 is rotated by inserting the latch 40, since the fourth pressurizing projection 250 is unable to further pressurize the first slider stopper 420, the slider 400 is moved by the elastic force of the slider spring 410 in the direction of the latch insertion hole 132.

In a situation that the first slider stopper 420 is not pressurized by the fourth pressurizing projection 250, i.e., a situation that the engaging part is not rotated despite that the elastic restoration force by the engaging part torsion spring 222 is working owing to the header 320 coupled with the first pressurizing recess 242a by the rotated engaging part 200, the slider extension portion 440 determines whether the door is closed in a manner of normally inserting the latch 40 in the latch insertion hole 132 and inserting the second insertion projection 234 in the latch hole 46.

In detail, in the situation that the first slider stopper 420 is not pressurized by the fourth pressurizing projection 250, the slider extension portion 440 is exposed by being exposed up to a moving path of the latch 40 from the latch insertion hole 132. Yet, in the situation that the door 16 is normally closed, the latch is inserted in the latch insertion hole 132 and the latch protrusion 48 pressurizes the slider extension portion 440 so as to pushes it in a direction getting distant from the latch insertion hole.

A location of the slider 400 in a state (normally closed door) that the latch 40 is normally inserted in the latch insertion hole 132 is provided closer to the latch insertion hole than that of the slider 400 in a state (open door) that the first slider stopper 420 is pressurized by the fourth pressurizing projection 250 or more distant than that of the slider 400 in a state (abnormally closed door) that the latch 40 is not normally inserted and that the first slider stopper 420 is not pressurized by the fourth pressurizing projection 250.

This becomes the factor for determining a location of the slider wing hole 452 (described later) provided at the slider 400. The reason for this is to further perform a process for locking the door as well as for closing the door 16 in order to operate a home appliance.

The door locking should be performed in the normal door closed state only but not be performed in the door open state or the abnormal door closed state. To this end, in the present invention, it is obtained whether the door currently corresponds to the normal door closed state, the door open state, or the abnormal door closed state according to a location of the slider wing hole 452 provided at the slider 400.

Meanwhile, the slider 400 may further include a second slider stopper 430 provided at an end of the slider 400 distant from the latch insertion hole 132 by being vertically protruding from the plate type member. Namely, the second slider stopper 430 is located in a direction opposite to the first slider stopper 420 centering on the slider perforated hole 470.

And, a slider spring fixing projection 414 may be provided at the second slider stopper 430 by being projected in a direction getting distant from the latch insertion hole 132.

The second slider stopper 430 may restrict a movement of the rotation stopper 350 in case that an external force is not applied to the rotation stopper 350 (e.g., a state that an elastic force by the rotation stopper torsion spring 354 is smallest, an original state that the rotation stopper 350 is not rotated by the trigger 332). In other words, although the slider 400 may move by receiving an elastic force in the direction of the latch insertion hole 132 from the slider spring 410, as the movement of the second slider stopper 430 is restricted by the rotation stopper 350, the movement of the slider 400 is restricted as well. This is valid for a case that the fourth pressurizing projection 250 does not pressurize the first slider stopper 420.

Meanwhile, the slider 400 may further include a slider delay projection 460 vertically projected from the plate type member. The slider delay projection 460 may be provided in a rotation radius of the rotation delay guider recess 360 provided at the bottom side of the operating part body 310. Meanwhile, the slider delay projection 460 led into the rotation delay guider recess 360 by overstriding the rotation delay inline 366. In doing so, the slider delay projection 460 may be damaged. To prevent it, as shown in FIG. 7, a periphery of the slider delay projection 460 is cut but a prescribed side is connected, in order to give elasticity to the slider delay projection 460.

The slider 400 may further include a slider wing 450 extending in one direction and a slider wing hole 452 provided at the slider wing. The slider wing 450 may be provided in a manner of extending in the same direction of the operating part wind 370. And, the slider wing hole 452 may be provided at have a cross-sectional area greater than the operating part wind hole 374.

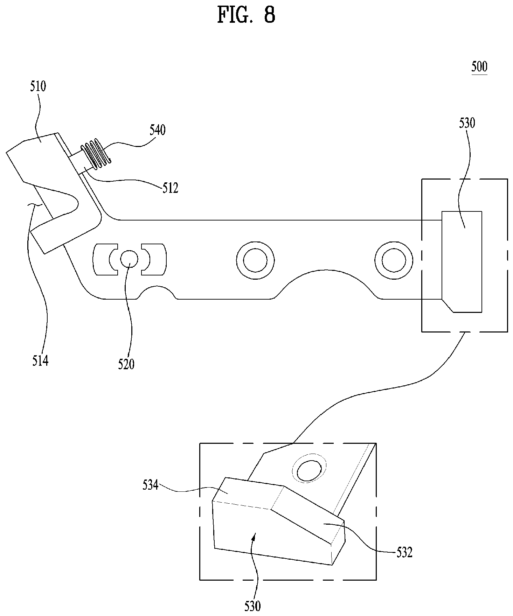

FIG. 8 is a diagram showing a door open/close sensing part provided at the present invention. Referring to FIG. 8, a door open/close detecting part 500 may include a door detection interlocking portion 510 configured to be interlocked with the engaging part 200 and a door detection push portion 530 configured to be interlocked with an electric device 600 described later.

The electric device 600 may mean a device capable of applying power to a home appliance or locking a closed door in response to opening/closing a door.

As shown in FIG. 4A, the electronic device 600 may include a first detection projection 630 projected externally. If the first detection projection 620 is pushed, it may open an internal electric circuit so as not to supply power to a home appliance. If such a push is released, the projection 630 short-circuits the internal electric circuit so as to supply power to the home appliance. For another instance, while the first detection projection 630 is projected, as the electric circuit is open, power can be supplied. While the first detection projection 630 is pushed, the electric circuit may be short-circuited. Yet, for clarity of the description, the present invention shall describe a case of not supplying power if the first detection projection 630 is pushed.

While the door is open, the door detection push portion 530 can control power not to be supplied to the home appliance by pushing the first detection projection 630. While the door is closed, the door detection push portion 530 can control power to be supplied to the home appliance by enabling the first detection projection 630 not to be pushed. Hence, it is able to prevent the home appliance from operating in a state that the door is not closed.

The door open/close detecting part 500 may include a door detection interlocking portion 510 provided within the housing to be rotatable centering on the rotation shaft 520 by extending from the door detection rotation shaft 520 in a direction of the engaging part 200 and a door detection push portion 530 extending in a direction of the first detection projection 630.

The door detection push portion 530 may include a push portion top surface 534 and a push portion incline surface 532 provided in a manner of inclining downward from the push portion top surface 534. While the door is open, the first detection projection 630 keeps being pushed by the push portion top surface 534. While the door is closed, as the door detection push portion 530 is moved so that the first detection projection 630 is moved along the push portion incline surface 532. Subsequently, if the first detection projection 630 passes a threshold point pushed by the push portion incline surface 532, it is fully projected from the electric device.

The door detection interlocking portion 510 may include an interlocking recess 514 in which the engaging part interlocking projection 260 extending from the engaging part 200 is inserted. Hence, the interlocking recess 514 is moved by the engaging part interlocking projection 260 together in response to the rotation of the engaging part 200, and the door open/close detecting part 500 is rotated centering on the door detection rotation shaft 520.

In order to prevent the engaging part interlocking projection 260 from escaping from the interlocking recess 514, a door detection spring 540 configured to pressurize a rear side of the interlocking recess 514 may be provided. One end of the door detection spring 540 is fixed to the housing 100, and the other end may be fixed by being fitted into the door detection fixing projection 512 provided at the door detection interlocking portion 510.

Meanwhile, as shown in FIG. 4A, the electric device 600 may include a first locking projection 610 externally projected to be movable in top-bottom direction by an internal electric circuit and a second locking projection 620 configured to be selectively projected outward only if the first locking projection 610 is located at a specific position.

In order to move the first locking projection 610, the electric device 600 may further include a solenoid (not shown) inside. For instance, if current is supplied to the solenoid, the locking projection 610 moves downward.

If the operating part locking portion 372 provided at the operating part wing 370 is provided as a recess, the first locking projection 610 may be inserted in the operating part locking portion 372. Hence, when the first locking projection 610 moves downward, the operating part locking portion 372 also receives a downward force, which can generate a rotation force of rotating the operating part wing 370 and the operating part body 310. Hence, the operating part body 310 can be rotated at a prescribed angle.

Only if the first locking projection 610 moves downward, the second locking projection 620 can be projected from the electric device 600. Namely, if the first locking projection 610 moves upward, the second locking projection 620 is led into an inside of the electric device 600. If the operating part wing hole 374 and the slider wing hole 452 communicate with each other at a right position (from which the second locking projection 620 is projected), the second locking projection 620 can be inserted by perforating the operating part wing hole 374 and the slider wing hole 452 both.

For instance, the second locking projection 620 may be provided movable by the deformation of bimetal provided within the electric device 600.

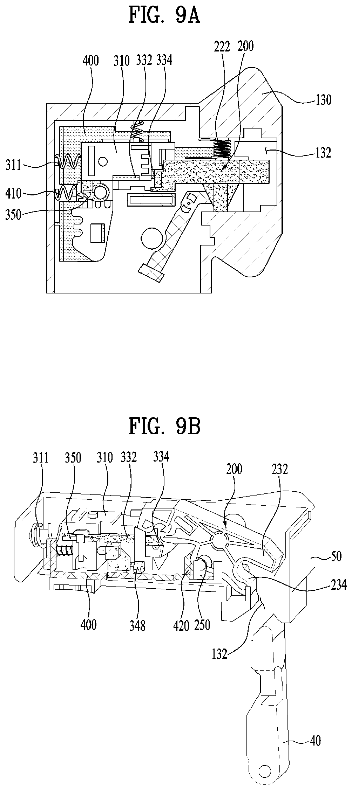

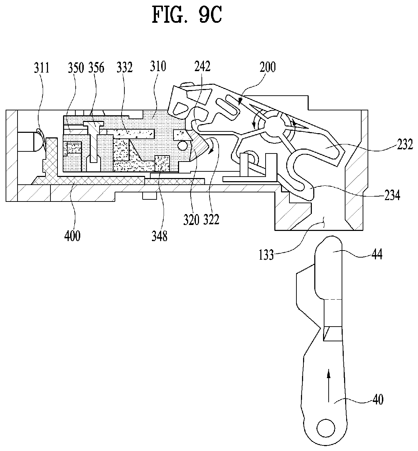

An operation of a locker according to the present invention is described in detail with reference to FIGs. 9 to 13 as follows.

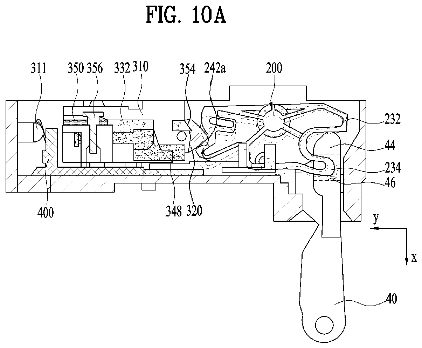

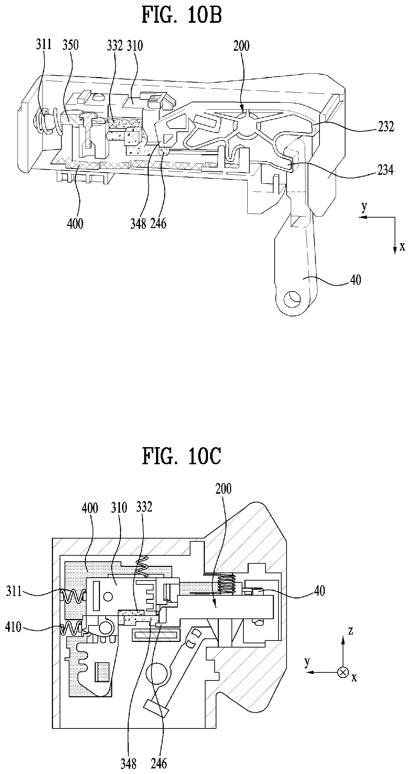

FIG. 9 is a diagram showing a state that a door is open in the present invention. FIG. 10 is a diagram showing a state that a door is closed in the present invention. An operation of closing an open door is described with reference to FIG. 9 and FIG. 10 in the following.

Referring to FIG. 9A and FIG. 9B, an open door state means a state before inserting the latch 40 in the latch insertion hole 132. The engaging part 200 is provided with an elastic force by the engaging part torsion spring 222 in order for the first and second insertion projections 232 and 234 to rotate in a direction of the latch insertion hole 132.

Since the fourth pressurizing projection 250 pressurizes the first slider stopper 420 in a direction getting distant from the latch insertion hole 132, the slider 400 is in a state of having moved in the direction getting distant from the latch insertion hole as well. Although the slider 400 receives the elastic force in the direction of the latch insertion hole 132 from the slider spring 410, since the elastic force of the slider spring 410 is smaller than that of the engaging part torsion spring 222, the slider spring 410 is in a maximally compressed state in a door open state.

Meanwhile, although the operating part 300 is receiving the elastic force in the direction of the latch insertion hole 132 from the first spring 311, its motion is restricted by the first and second shafts 316 and 317 provided at the operating part 300.

Referring to FIG. 9C, if the latch head 44 is inserted in the latch insertion hole 132, since the latch protrusion 48 is guided by the insertion hole sill 132b provided at the latch insertion hole 132, the latch 40 can be inserted in the latch insertion hole 132 at a uniform height.

The latch head 44 pressurizes the first insertion projection 232 in a direction getting distant from the latch insertion hole 132 by coming in contact with the first insertion projection 232. If a force pressurized by the latch head 44 is greater than the elastic force of the engaging part torsion spring 222, the engaging part 200 is rotated in a direction opposite to an elastic force direction of the engaging part torsion spring 222.

If the latch 40 is fully inserted in the latch insertion hole 132, the second insertion projection 234 is inserted inside the latch hole 46, thereby fixing the latch 40 so as not to be withdrawn from the latch insertion hole 132.

The first pressurizing projection 242 of the engaging part 200 pressurizes the header 320 of the operating part 300. Specifically, the first pressurizing projection 242 pressurizes the first header incline surface 322.

Since the header 320 is provided at one end of the operating part body 310 so as to be rotatable in the direction of the latch insertion hole 132 only, the header 320 pressurized by the first pressurizing projection 242 rotates and the first pressurizing projection 242 continues to rotate along the first header incline surface 322.

In this case, the operating part 300 moves in a direction getting distant from the latch insertion hole 132 and the engaging part torsion spring 222 is compressed.

Referring to FIG. 10A, if the first pressurizing projection 242 goes over an end of the header 320, a force of pressurizing the header 320 and the operating part 300 disappears. Hence, the operating part 300 and the header 320 is moved in the direction of the latch insertion hole 132 by an elastic restoration force of the engaging part torsion spring 222 and the end of the header 320 is seated on the first pressurizing recess 242a of the engaging part 200.

Although the engaging part 200 moves in an original state direction by receiving the elastic force of the engaging part torsion spring 222, since the header 320 is provided at restrict a rotational motion in the opposite direction of the latch insertion hole 132, if a position at which the header 320 cannot rotate is reached, the engaging part 200 is not rotated but fixed. Hence, the latch 40 is fixed by the second insertion projection 234 inserted in the latch hole 46.

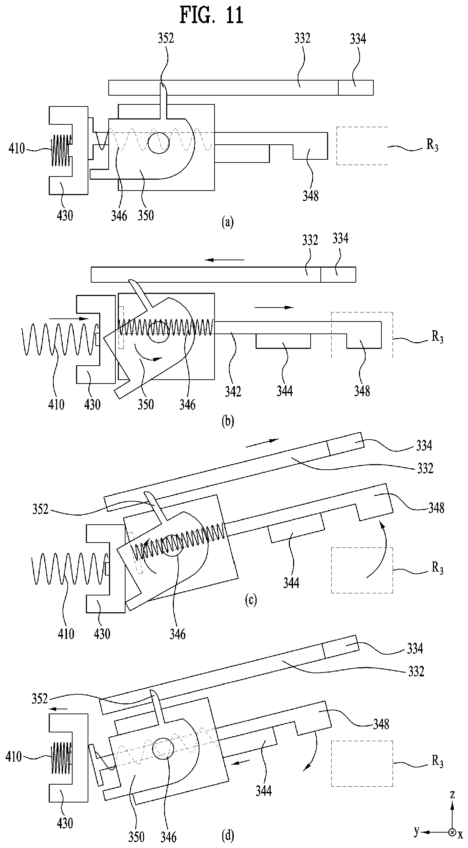

The operational relation among a trigger, a rotation stopper and a release bar is described with reference to FIG. 11 as follows.

FIG. 11 shows a state before inserting the latch 40. Although the second slider stopper 430 receives an elastic force in a direction getting close to the latch insertion hole 132 (i.e., negative direction of y-axis) from the slider spring 410, it is in a state that a movement is restricted by the rotation stopper 350.

FIG. 11(b) shows a process for inserting the latch 40. Before the first pressurizing projection 242 completely goes over an end of the header 320, the second pressurizing projection 244 pressurizes the trigger incline 334 and the trigger 322 moves in a direction getting distant from the latch insertion hole 132 (i.e., positive direction of y-axis). Owing to the movement of the trigger 332, the rotation stopper 350 rotates.

Thus, as the rotation stopper 350, which has been restricted the movement of the second slider stopper 430, rotates, the second slider stopper 430 is moved in the direction of the latch insertion hole 132 by an elastic force of the slider spring 410.

As described above, the second slider stopper 430 moves the release bar 342 in a direction getting close to the latch insertion hole 132 (i.e., negative direction of y-axis) by applying a force to the end of the release bar 342. This is because the elastic force of the release bar spring 346 is provided smaller than that of the slider spring 410.

Thus, the release bar incline 348 provided at the end of the release bar 342 enters a rotation radius R3 of the third pressurizing projection 246. As shown in FIG. 11(a), the release bar incline 348 does not enter the rotation radius R3 of the third pressurizing projection 246 until the latch 40 is inserted.

This is because, if the third pressurizing projection 246 and the release bar incline 348 interfere with each other in the course of closing the door, since the operating part 300 is rotated, it may cause a problem that the door is not closed.

To prevent this, in the present invention, it is able to set a time interval to enable the release bar 342 to move after completion of rotation of the engaging part 200. Or, the third pressurizing projection 246 may be provided at arrive at a position, where the release portion incline 348 arrives by being moved by the second slider stopper 430, earlier. Hence, the release bar incline 348 is set not to be placed within the rotation radius of the third pressurizing projection 246 in the course of closing the door.

Meanwhile, if a state that the door is closed is entered, as shown in FIG. 10B and FIG. 10C, the release bar incline 348 is provided between the third pressurizing projection 246 and the housing 100. Or, the release bar incline 348 is provided in the radius direction of the third pressurizing projection 246. Or, the release bar incline 348 is placed in a pressurizing direction of the third pressurizing projection 246.

If the door is closed, the second insertion projection 234 is inserted in the latch hole 46 so as to fix the latch 40 and the door closed state can be maintained.

Meanwhile, comparing FIG. 9A and FIG. 10C, there is a difference in a position of the slider 400. As shown in FIG. 9A, since the second slider stopper 430 is pressurized by the third pressurizing projection 246 in the door open state, the slider 400 is located most distant from the latch insertion hole 132. On the contrary, as shown in FIG. 10C, since the slider extension portion 440 is pressurized by the latch protrusion 48 in the door closed state, although the slider 400 moves in the direction getting distant from the latch insertion hole 132, a position of the slider 400 is located closer to the latch insertion hole 132 in comparison with the door open state.

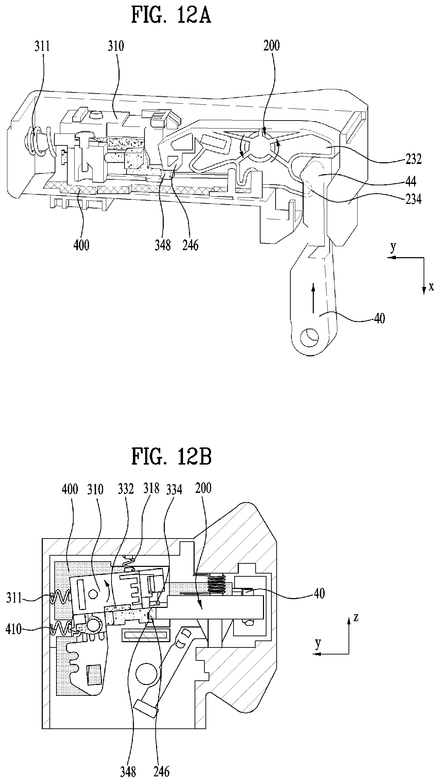

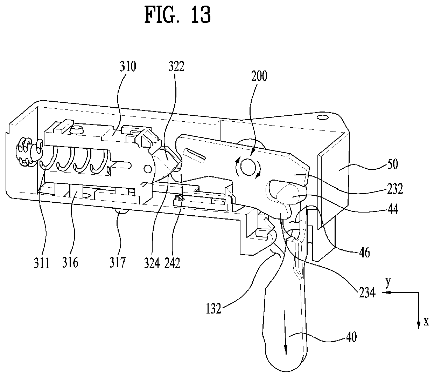

FIG. 12 is a diagram showing that a door is normally opened in the present invention. FIG. 13 is a diagram showing that a door is forced to be opened in the present invention. An operation of normally opening a door and an operation of forcing a door to be opened are described in detail with reference to FIG. 12 and FIG. 13 as follows.

Referring to FIG. 12A, if a front side of the door 16 is pushed to open the door, the latch 40 moves in a direction of being inserted in the latch insertion hole 132 (i.e., -, negative direction of x-axis) and rotates the engaging part 200 in an opposite direction of an elastic force direction of the engaging part torsion spring 222 (i.e., counterclockwise with reference to negative direction of z-axis).

The third pressurizing projection 246 provided relatively lower than the first or second pressurizing projection 242 or 244 pressurizes the release portion incline 348. By the force of pressurizing the release portion incline 348, as shown in FIG. 12B, the release portion incline 348 and the operating part body 310 make rotational motions.

The reason for this is described as follows. First of all, the movement of the operating part 300 is limited to a straight motion in a direction getting distant from or close to the latch insertion hole 132 within the housing by the first shaft 316 and the second shaft 317 and a rotational motion in a direction guided by the second shaft with reference to the first shaft as a reference point. And, the force of pressurizing the release portion incline 348 contributes to the rotational motion of the operating part 300 only.

Owing to the rotation of the operating part 300, the header 320 deviates from the rotation radius of the first pressurizing projection 242. Namely, since the header 320 that used to press the first pressurizing projection 242 disappears, the header 320 rotates into an original state using the elastic force by the engaging part torsion spring 222 as a restoration force.

FIG. 11(c) shows a state that the release portion incline 348 and the operating part 300 are rotated by the third pressurizing projection 246. Owing to the rotation of the operating part 300, the pressurizing force of the second pressurizing projection 244 that used to work on the trigger incline 334 is removed. This is because the trigger incline 334 escapes from the rotation radius of the second pressurizing projection 244 owing to the rotation of the operating part 300.

Thus, the trigger 332 receives a restoration force from the rotation stopper torsion spring 354 provided at the rotation stopper 350 and moves to an original state.

As the latch 40 is withdrawn from the latch insertion hole 132, the engaging part 200 rotates to restore into an original state by the elastic force of the engaging part torsion spring 222. Thus, the fourth pressurizing projection 250 of the engaging part 200 re-pressurizes the first slider stopper 420 so as to move the slider 400 in a direction getting distant from the latch insertion hole 132. In this case, the operating part 300 rotates into an original state using the elastic force of the second spring 312 as a restoration force.

In the present invention, a time interval is set between the movement of the slider 400 and the rotation for the operating part 300 to return to an original state. This is implemented in a manner that the slider delay projection 460 is located in the rotation radius of the rotation delay rib 364 in case that the operating part 300 is rotated by the third pressurizing projection 246.

Particularly, the slider delay projection 460 is led into an inside of the rotation delay guider recess 360 by a relative movement of the rotation delay rib 364. In this case, although the operating part attempts to rotate for restoration by the second spring 312, the rotation delay rib 364 is unable to rotate due to the slider delay projection 460.

The slider delay projection 460 is withdrawn externally through the rotation delay doorway 362 provided at one end of the rotation delay guider recess 360 while moving within the rotation delay guider recess 360 (e.g., while the slider is moving by the fourth pressurizing projection 250). In doing so, the restoration rotation of the operating part 300 is restricted but the slider 400 can move only. Hence, after the movement of the slider 400 has been preceded, the restoration rotation of the operation part 300 is performed in a manner of leaving a prescribed time interval.

Referring to FIG. 13, if the door is forced to be pulled, the latch 40 moves in a direction of being withdrawn from the latch insertion hole 132 (i.e., positive direction of x-axis).

Since the second insertion projection 234 is already inserted in the latch hole 46, the second insertion projection 234 moves in the direction of the latch insertion hole 132, thereby moving the engaging part 200 in the elastic force direction of the engaging part torsion spring 222.

Although the second header incline surface 324 seated at the first pressurizing recess 242a is pressurized by the first pressurizing projection 242, since the rotation of the header 320 is restricted, the operating part 300 makes a straight movement in a direction getting distant from the latch insertion hole 132. If the first pressurizing projection 242 passes the threshold point over the end of the header 320, the engaging part 200 is fully rotated into the door open state by the engaging part torsion spring 222. Hence, the second insertion projection 234 is withdrawn from the latch hole 46 and the latch 40 is fully withdrawn from the latch insertion hole 132 as well.

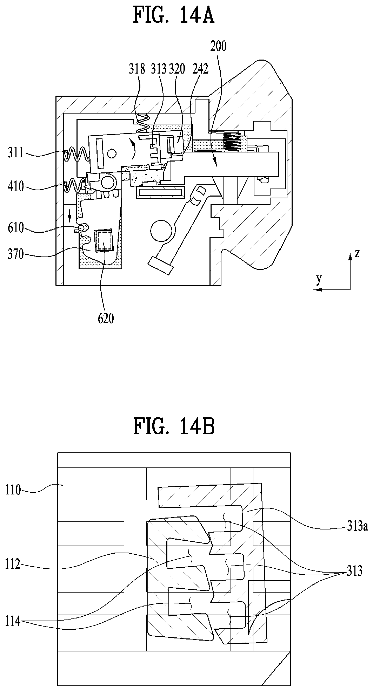

FIG. 14 is a diagram showing a state that a closed door is locked in present invention. An operation of locking a closed door is described with reference to FIG. 14.

Referring to FIG. 14A, when a home appliance is operating or if it is determined that it is necessary to lock a closed door, the first locking projection 610 projected from the electric device 600 is moved downward.

The first locking projection 610 is interlocked with the operating part locking portion 372 provided at the operating part wing 370. If a recess is provided at the operating part locking portion 372, the first locking projection 610 can be inserted in the recess of the operating part locking portion 372. Hence, if the first locking projection 610 is moved downward, a force is delivered to the operating part locking portion 372 and the operating part wing 370 and the operating part 300 are rotated in a direction that the second shaft 317 is above the second shaft 316 with reference to the second shaft 316 (i.e., positive direction of z-axis) or a counterclockwise direction for a negative direction of x-axis centering on the first shaft.

Yet, a rotation angle of the operating part 300 by the first locking projection 610 is set smaller than that of the operating part 300 by the third pressurizing projection 246. Particularly, if the operating part is rotated by the third pressurizing projection 246, the header 320 deviates from the rotation radius of the first pressurizing projection 242. Yet, if the operating part 300 is rotated by the first locking projection 610, the header 320 is still placed in the rotation radius of the first pressurizing projection 242. Hence, the door is not released by moving the first locking projection 610 downward.

As shown in FIG. 14B, if the operating part 300 is rotated by the first locking projection 610, the operating part body stopper 313 provided at the rotated operating part 300 is placed on a moving trajectory of the housing stopper 112 provided at the housing.

Hence, if the door is pulled to force to be opened (a case that the latch is pulled in a direction of being withdrawn from the latch insertion hole), the operating part 300 receives a force of moving in a direction getting distant from the latch insertion hole 132. Yet, the movement of the operating part 300 may be restricted due to the interference between the operating part body stopper 313 and the housing stopper 112. Hence, it is unable to force the door to be opened.

Yet, if case of forcing the door to be opened, the body stopper 313 and the housing stopper 112 may enable the door to be opened by appropriately changing rigidity, thickness and the like. Namely, if a force over a predetermined level works, the operating part body stopper 313 or the housing stopper 112 is broken so that the door can be opened.

Meanwhile, before the operating part 300 is rotated by the first locking projection 610, the housing stopper recess 114 and the operating part stopper recess 313a cross with each other so as not to engage with each other despite that the operating part 300 is moved.

Meanwhile, the slider wing hole 452 and the operating part wing hole 374 may communicate with each other in order for the second locking projection 620, which is projected from the electric device 600 owing to the rotation of the operating part 300, to be inserted therein.

The second locking projection 620 having perforated both of the slider wing hole 452 and the operating part wing hole 374 prevents the movement of the operating part 300, thereby preventing the door from being opened.

In order for the projected second locking projection 620 to perforate both of the slider wing hole 452 and the operating part wing hole 374, positions of the operating part and the slider are important. The position of the slider 400 is a position at which the door is normally closed and corresponds to a state that the fourth pressurizing projection 250 does not pressurizes the first slider stopper 420 and that the latch protrusion 48 is pressurizing the slider extension portion 440. And, the position of the operating part corresponds to a state that the header 320 is seated at the first pressurizing recess 242a and that the operating part 300 is rotated by the first locking projection 610.

Since the second locking projection 620 is a bimetal and is projected from the electric device, its pressurizing force is not significant. Hence, the positions of the operating part and the slider are placed at the above-mentioned positions, thereby enabling the operating part wing hole 374 and the slider wing hole 452 to communicate with each other.

Meanwhile, the home appliance according to the present invention may be set to operate only if the second locking projection 620 is fitted into both of the operating part wing hole 374 and the slider wing hole 452. In this case, as the closed door is locked, it is able to secure that the door is not opened during the home appliance operation.

It will be apparent to those skilled in the art that various modifications and variations can be made in the present invention.

Thus, it is intended that the present invention covers the modifications and variations of this invention provided they come within the scope of the appended claims and their equivalents.

## Claims

1. A home appliance, comprising:
a cabinet (10) having a storage space (12) formed inside and an entrance (14) communicating with the storage space (12);
a door (16) rotatably coupled with the cabinet (10) to open/close the entrance (12);
a latch (40) provided at one of the door (16) and the cabinet (10); and
a coupling part (50) provided at the other one of the door (16) and the cabinet (10), the coupling part comprising:
a housing (100) including a latch insertion hole (132) for inserting the latch (40) therein;
an engaging part (200), the engaging part (200) including an engaging part body (210) rotatably provided within the housing (100), a latch insertion portion (230) for insertion of an end of the latch (40), and a pressurizing portion (240) having a first pressurizing projection (242) and a third pressurizing projection (246), the latch insertion portion (230) and the pressurizing portion (240) being arranged at opposite ends of the engaging part body (210);
an engaging part torsion spring (222) provided at the engaging part (200) and configured to provide an elastic force for enabling the latch insertion portion (230) to rotate in a direction getting close to the latch insertion hole (132);
an operating part (300) configured to move in a direction getting distant from the latch insertion hole (132) when being pressurized by the first pressurizing projection (242) and to rotate in a direction perpendicular to a pressurizing direction of the third pressurizing projection (246);
a first spring (311) for providing a restoration force to enable the operating part (300) to be restored into a state before being pressurized by the first pressurizing projection (242); and
a second spring (312) for providing a restoration force to enable the operating part (300) to be restored into a state before being pressurized by the third pressurizing projection (246).

2. The home appliance of claim 1, wherein the first pressurizing projection (242) is located closer to the operating part (300) than the third pressurizing projection (246).

3. The home appliance of claim 1 or 2, the operating part (300) comprising an operating part body (310) for receiving a force from each of the first spring (311) and the second spring (312).

4. The home appliance of claim 3, the operating part (300) comprising further a header (320) including a first header incline surface (322) and a second incline surface (324) provided at an end of the operating part body (310), the first header incline surface (322) and the second incline surface (324) being inclined with respect to each other and forming a pointed end of the operating part body (310).

5. The home appliance of claim 4, wherein if the door (16) is closed, the first pressurizing projection (242) is configured to move the operating part (300) by pressurizing the first header incline surface (322).

6. The home appliance of claim 4 or 5, wherein if the first pressurizing projection (242) passes an end of the header (320), a movement of the first pressurizing projection (242) is restricted by the second header incline surface (324).

7. The home appliance according to any one of claims 3 to 6, wherein a release bar incline (348) configured to be pressurized by the third pressurizing projection (246) is provided at a lateral surface of the operating part body (310).

8. The home appliance of claim 7, wherein the release bar incline (348) is inclined at a prescribed angle against a pressurizing direction of the third pressurizing projection (246).

9. The home appliance of claim 8, wherein the third pressurizing projection (246) further includes a third pressurizing surface (246a) inclined corresponding to the release bar incline (348).

10. The home appliance according to any one of claims 7 to 9, wherein if the door (16) is opened, the third pressurizing projection (246) is configured to rotate the operating part (300) by pressurizing the release bar incline (348) for removing the header (320) from a rotation radius of the first pressurizing projection (242).

11. The home appliance of any one of claims 4 to 10, wherein the header (320) is provided at an end of the operating part (300) to be rotatable on a header shaft (328) and wherein a header sill (326) protruding from a surface vertical to the header shaft (328) is configured to prevent an end of the header (320) to rotate over a position higher than the header shaft (328).

12. The home appliance according to any one of claims 5 to 11, further comprising:
a release bar (342) having the release bar incline (348) provided thereto, the release bar (342) being moveable in a moving direction of the operating part (300) if pressurized by the first pressurizing projection (242); and
a release bar guider (340) provided at the operating part body (310) to guide the release bar.

13. The home appliance of claim 12, wherein the release bar (342) is configured to be moved for removing the release bar incline (348) from a rotation radius of the third pressurizing projection (246) in a state that the door (16) is open, and
wherein the release bar is configured to be moved for placing the release bar incline (348) within the rotation radius of the third pressurizing projection (246) in a state that the door (16) is closed.

14. The home appliance of any one of the preceding claims, wherein a length of the third pressurizing projection (246) is longer than that of the first pressurizing projection (242).

## Patentansprüche

1. Haushaltsgerät, das Folgendes umfasst:
ein Gehäuse (10), das einen Lagerungsraum (12), der im Inneren ausgebildet ist, und einen Einlass (14), der mit dem Lagerungsraum (12) kommuniziert, aufweist;
eine Tür (16), die mit dem Gehäuse (10) drehbar gekoppelt ist, um den Einlass (12) zu öffnen bzw. zu schließen;
einen Riegel (40), der an der Tür (16) oder an dem Gehäuse (10) vorgesehen ist; und
ein Kopplungsteil (50), das am jeweils anderen Teil der Tür (16) und des Gehäuses (10) vorgesehen ist, wobei das Kopplungsteil Folgendes umfasst:
ein Kästchen (100), das ein Riegeleinsetzloch (132) zum Einsetzen des Riegels (40) aufweist;
ein Eingriffteil (200), wobei das Eingriffteil (200) einen Eingriffteilkörper (210), der in dem Kästchen (100) drehbar vorgesehen ist, einen Riegeleinsetzabschnitt (230) zum Einsetzen eines Endes des Riegels (40) und einen Druckbeaufschlagungsabschnitt (240), der einen ersten Druckbeaufschlagungsvorsprung (242) und einen dritten Druckbeaufschlagungsvorsprung (246) aufweist, umfasst, wobei der Riegeleinsetzabschnitt (230) und der Druckbeaufschlagungsabschnitt (240) an entgegengesetzten Enden des Eingriffteilkörpers (210) angeordnet sind;
eine Eingriffteil-Torsionsfeder (222), die bei dem Eingriffteil (200) vorgesehen ist und konfiguriert ist, eine elastische Kraft bereitzustellen, damit sich der Riegeleinsetzabschnitt (230) in einer Richtung drehen kann, um näher an das Riegeleinsetzloch (132) zu kommen;
ein Funktionsteil (300), das konfiguriert ist, sich in einer Richtung zu bewegen, um sich von dem Riegeleinsetzloch (132) zu entfernen, wenn es durch den ersten Druckbeaufschlagungsvorsprung (242) mit Druck beaufschlagt wird, und sich in einer Richtung senkrecht zu einer Druckbeaufschlagungsrichtung des dritten Druckbeaufschlagungsvorsprungs (246) zu drehen;
eine erste Feder (311) zum Bereitstellen einer Rückstellkraft, damit das Funktionsteil (300) in einen Zustand zurückgeführt werden kann, bevor es durch den ersten Druckbeaufschlagungsvorsprung (242) mit Druck beaufschlagt wird; und
eine zweite Feder (312) zum Bereitstellen einer Rückstellkraft, damit das Funktionsteil (300) in einen Zustand zurückgeführt werden kann, bevor es durch den dritten Druckbeaufschlagungsvorsprung (246) mit Druck beaufschlagt wird.

2. Haushaltsgerät nach Anspruch 1, wobei sich der erste Druckbeaufschlagungsvorsprung (242) näher als der dritte Druckbeaufschlagungsvorsprung (246) an dem Funktionsteil (300) befindet.

3. Haushaltsgerät nach Anspruch 1 oder 2, wobei das Funktionsteil (300) einen Funktionsteilkörper (310) zum Aufnehmen einer Kraft von der ersten Feder (311) und der zweiten Feder (312) umfasst.

4. Haushaltsgerät nach Anspruch 3, wobei das Funktionsteil (300) ferner ein Kopfteil (320) umfasst, das eine erste geneigte Kopfteilfläche (322) und eine zweite geneigte Oberfläche (324), die an einem Ende des Funktionsteilkörpers (310) vorgesehen sind, umfasst, wobei die erste geneigte Kopfteilfläche (322) und die zweite geneigte Oberfläche (324) in Bezug aufeinander geneigt sind und ein spitz zulaufendes Ende des Funktionsteilkörpers (310) bilden.

5. Haushaltsgerät nach Anspruch 4, wobei dann, wenn die Tür (16) geschlossen ist, der erste Druckbeaufschlagungsvorsprung (242) konfiguriert ist, das Funktionsteil (300) durch Beaufschlagen der ersten geneigten Kopfteilfläche (322) mit Druck zu bewegen.

6. Haushaltsgerät nach Anspruch 4 oder 5, wobei dann, wenn sich der erste Druckbeaufschlagungsvorsprung (242) an einem Ende des Kopfteils (320) vorbeibewegt, eine Bewegung des ersten Druckbeaufschlagungsvorsprungs (242) durch die zweite geneigte Kopfteilfläche (324) eingeschränkt wird.

7. Haushaltsgerät nach einem der Ansprüche 3 bis 6, wobei eine Auslösestift-Neigung (348), die konfiguriert ist, durch den dritten Druckbeaufschlagungsvorsprung (246) mit Druck beaufschlagt zu werden, an einer seitlichen Oberfläche des Funktionsteilkörpers (310) vorgesehen ist.

8. Haushaltsgerät nach Anspruch 7, wobei die Auslösestift-Neigung (348) in einem vorgegebenen Winkel gegenüber einer Druckbeaufschlagungsrichtung des dritten Druckbeaufschlagungsvorsprungs (246) geneigt ist.

9. Haushaltsgerät nach Anspruch 8, wobei der dritte Druckbeaufschlagungsvorsprung (246) ferner eine dritte Druckbeaufschlagungsfläche (246a) aufweist, die entsprechend der Auslösestift-Neigung (348) geneigt ist.

10. Haushaltsgerät nach einem der Ansprüche 7 bis 9, wobei dann, wenn die Tür (16) geöffnet ist, der dritte Druckbeaufschlagungsvorsprung (246) konfiguriert ist, das Funktionsteil (300) zu drehen, indem die Auslösestift-Neigung (348) mit Druck beaufschlagt wird, um das Kopfteil (320) aus einem Drehradius des ersten Druckbeaufschlagungsvorsprungs (242) zu entfernen.

11. Haushaltsgerät nach einem der Ansprüche 4 bis 10, wobei das Kopfteil (320) an einem Ende des Funktionsteils (300) so vorgesehen ist, dass es auf einer Kopfteilwelle (328) gedreht werden kann, und wobei eine Kopfteilschwelle (326), die von einer Oberfläche vertikal zu der Kopfteilwelle (328) vorsteht, konfiguriert ist, zu verhindern, dass sich ein Ende des Kopfteils (320) über eine Position dreht, die höher als die Kopfteilwelle (328) ist.

12. Haushaltsgerät nach einem der Ansprüche 5 bis 11, das ferner Folgendes umfasst:
einen Auslösestift (342), an dem die Auslösestift-Neigung (348) vorgesehen ist, wobei der Auslösestift (342) in einer Bewegungsrichtung des Funktionsteils (300) bewegt werden kann, wenn er durch den ersten Druckbeaufschlagungsvorsprung (242) mit Druck beaufschlagt wird; und
eine Auslösestiftführung (340), die an dem Funktionsteilkörper (310) vorgesehen ist, um den Auslösestift zu führen.

13. Haushaltsgerät nach Anspruch 12, wobei der Auslösestift (342) konfiguriert ist, bewegt zu werden, um in einem Zustand, in dem die Tür (16) offen ist, die Auslösestift-Neigung (348) aus einem Drehradius des dritten Druckbeaufschlagungsvorsprungs (246) zu entfernen, und
wobei der Auslösestift konfiguriert ist, bewegt zu werden, um in einem Zustand, in dem die Tür (16) geschlossen ist, die Auslösestift-Neigung (348) in dem Drehradius des dritten Druckbeaufschlagungsvorsprungs (246) anzuordnen.

14. Haushaltsgerät nach einem der vorhergehenden Ansprüche, wobei eine Länge des dritten Druckbeaufschlagungsvorsprungs (246) länger als die des ersten Druckbeaufschlagungsvorsprungs (242) ist.

## Revendications

1. Appareil domestique, comprenant :
une armoire (10) ayant un espace de stockage (12) formé à l'intérieur et une entrée (14) qui communique avec l'espace de stockage (12) ;
une porte (16) couplée avec faculté de rotation à l'armoire (10) pour ouvrir/fermer l'entrée (12) ;
une gâche (40) prévue sur un élément parmi la porte (16) et l'armoire (10) ; et
une partie de couplage (50) prévue sur l'autre élément parmi la porte (16) et l'armoire (10), la partie de couplage comprenant :
un boîtier (100) incluant un trou d'insertion de gâche (132) pour insérer la gâche (40) à l'intérieur ;
une partie d'engagement (200), la partie d'engagement (200) incluant un corps de partie d'engagement (210) prévu avec faculté de rotation à l'intérieur du boîtier (100), une portion d'insertion de gâche (230) pour l'insertion d'une extrémité de la gâche (40), et une portion de pressurisation (240) ayant une première projection de pressurisation (242) et une troisième projection de pressurisation (246), la portion d'insertion de gâche (230) et la portion de pressurisation (240) étant agencées à des extrémités opposées du corps (210) de la partie d'engagement ;
un ressort de torsion pour partie d'engagement (222) prévu au niveau de la partie d'engagement (210) et configuré pour appliquer une force élastique pour permettre que la portion d'insertion de gâche (230) effectue une rotation dans une direction qui se rapproche du trou d'insertion de gâche (132) ;
une partie d'actionnement (300) configurée pour se déplacer dans une direction qui s'éloigne du trou d'insertion de gâche (132) lorsqu'elle est pressurisée par la première projection de pressurisation (242) et pour tourner dans une direction perpendiculaire à une direction de pressurisation de la troisième projection de pressurisation (246) ;
un premier ressort (311) pour appliquer une force de rappel et permettre que la partie d'actionnement (300) soit ramenée dans un état avant d'être pressurisée par la première projection de pressurisation (242) ; et
un second ressort (312) pour appliquer une force de rappel et permettre que la partie d'actionnement (300) soit ramenée dans un état avant d'être pressurisée par la troisième projection de pressurisation (246).

2. Appareil domestique selon la revendication 1, dans lequel la première projection de pressurisation (242) est située plus proche de la partie d'actionnement (300) que la troisième projection de pressurisation (246).

3. Appareil domestique selon la revendication 1 ou 2, dans lequel la partie d'actionnement (300) comprend un corps de partie d'actionnement (310) pour recevoir une force depuis chacun du premier ressort (311) et du second ressort (312).

4. Appareil domestique selon la revendication 3, dans lequel la partie d'actionnement (300) comprend en outre une première partie de tête (320) incluant une première surface inclinée de tête (322) et une seconde surface inclinée (324) prévues à une extrémité du corps de partie d'actionnement (310), la première surface inclinée de tête (322) et la seconde surface inclinée (324) étant inclinées l'une par rapport à l'autre et formant une extrémité pointue du corps de partie d'actionnement (310).

5. Appareil domestique selon la revendication 4, dans lequel, si la porte (16) est fermée, la première projection de pressurisation (242) est configurée pour déplacer la partie d'actionnement (300) en pressurisant la première surface inclinée de tête (322).

6. Appareil domestique selon la revendication 4 ou 5, dans lequel si la première projection de pressurisation (242) passe une extrémité de la partie de tête (320), un mouvement de la première projection de pressurisation (242) est restreint par la seconde surface inclinée de tête (324).

7. Appareil domestique selon l'une quelconque des revendications 3 à 6, dans lequel une inclinaison de barre de libération (342), configurée pour être pressurisée par la troisième projection de pressurisation (246), est prévue sur une surface latérale du corps de partie d'actionnement (310).

8. Appareil domestique selon la revendication 7, dans lequel l'inclinaison de barre de libération (348) est inclinée sous un angle prescrit à rencontre d'une direction de pressurisation de la troisième projection de pressurisation (246).

9. Appareil domestique selon la revendication 8, dans lequel la troisième projection de pressurisation (246) inclut en outre une troisième surface de pressurisation (246a) inclinée en correspondance de l'inclinaison de barre de libération (348).

10. Appareil domestique selon l'une quelconque des revendications 7 à 9, dans lequel si la porte (16) est ouverte, la troisième projection de pressurisation (246) est configurée pour faire tourner la partie d'actionnement (300) en pressurisant l'inclinaison de barre de libération (348) de supprimer la partie de tête (320) hors d'un rayon de rotation de la première projection de pressurisation (242).

11. Appareil domestique selon l'une quelconque des revendications 4 à 10, dans lequel la partie de tête (320) est prévue à une extrémité de la partie d'actionnement (300) pour être capable de rotation sur un arbre de tête (328), et dans lequel un linteau de tête (326) qui se projette depuis une surface verticale vers l'arbre de tête (328) est configuré pour empêcher qu'une extrémité de la partie de tête (320) tourne au-dessus d'une position plus haute que l'arbre de tête (328).

12. Appareil domestique selon l'une quelconque des revendications 5 à 11, comprenant en outre :
une barre de libération (342) ayant l'inclinaison de barre de libération (348) ménagée sur celle-ci, la barre de libération (342) étant déplaçable dans une direction de déplacement de la partie d'actionnement (300) si elle est pressurisée par la première projection de pressurisation (242) ; et
un guide pour barre de libération (340) prévu au niveau du corps de partie d'actionnement (310) pour guider la barre de libération.

13. Appareil domestique selon la revendication 12, dans lequel la barre de libération (342) est configurée pour être déplacé afin d'enlever l'inclinaison de barre de libération (348) hors d'un rayon de rotation de la troisième projection de pressurisation (246) dans un état dans lequel la porte (16) est ouverte, et
dans lequel la barre de libération est configurée pour être déplacée afin de placer l'inclinaison de barre de libération (348) à l'intérieur du rayon de rotation de la troisième projection de pressurisation (246) dans un état dans lequel la porte (16) est fermée.

14. Appareil domestique selon l'une quelconque des revendications précédentes, dans lequel une longueur de la troisième projection de pressurisation (246) est plus longue que celle de la première projection de pressurisation (242).
